# EUROPEAN PATENT APPLICATION

(11) **EP 4 068 846 A1**
(43) Date of publication of application: **05.10.2022**
(21) Application number: 21166249.9
(22) Date of filing: 31.03.2021
(51) Int. Cl.: H04W 28/08

(54) **COMMUNICATION NETWORK ARRANGEMENT AND METHOD FOR RESTRICTING SIGNALLING TO AND FROM A QUOTA MONITORING AND MANAGEMENT COMPONENT**

(71) Applicant: NTT DoCoMo, Inc., Tokyo 100-6150 (JP)
(72) Inventor: THAKOLSRI, Srisakul, 80687 Munich (DE); SAMA, Malla Reddy, 80687 Munich (DE)
(74) Representative: Viering, Jentschura & Partner mbB Patent- und Rechtsanwälte

(57) **Abstract**

According to one embodiment, a communication network arrangement is described comprising a quota monitoring and management component, one or more enforcement components, wherein each enforcement component is configured to send, in response to a request for a communication service, an enquiry to the quota monitoring and management component about whether providing the communication service would violate a quota and a controller configured to decide whether to restrict signalling between the one or more enforcement components and the quota monitoring and management component and configured to suppress the transmission of enquiries from the one or more enforcement components to the quota monitoring and management component if it has decided to restrict signalling between the one or more enforcement components and the quota monitoring and management component.

## Description

The present disclosure relates to communication network arrangements and methods for restricting signalling to and from a quota monitoring and management component.

In a communication network such as a 5G mobile radio communication network it may be desirable to introduce and implement limitations or quota with respect to the data rate in uplink and downlink, e.g. the maximum data rate used by sessions provided by the network slice for a single UE. Similarly, it may be desirable to introduce and implement limitations or quota with respect to the number of mobile terminals registered, e.g. for a certain network slice, or the number of sessions established, e.g. by means of a certain network slice. This may for example be used according the Service Level Agreement (SLA) agreed between the service provider and the network operator. It is to note that such limitation or quota may be used to prevent network overload or slice overload and thus to ensure a certain performance of the communication network. However, this may not be always the case, but such limitation or quota may be simply based on the SLA agreement between the service provider and the network provider regardless of whether to prevent network overload or slice overload or not. Corresponding approaches which allow efficient implementation and enforcement of such quota, e.g. with little control signalling load, are desirable.

According to one embodiment, a communication network arrangement is provided including a quota monitoring and management component, one or more enforcement components, wherein each enforcement component is configured to send, in response to a request for a communication service, an enquiry to the quota monitoring and management component about whether providing the communication service would violate a quota and a controller configured to decide whether to restrict signalling between the one or more enforcement components and the quota monitoring and management component and configured to restrict the transmission of enquiries from the one or more enforcement components to the quota monitoring and management component if it has decided to restrict signalling between the one or more enforcement components and the quota monitoring and management component.

According to further embodiments, a method for reducing signalling to and from a quota monitoring and management component according to the above communication network arrangement is provided.

Various Examples are described in the following.
Example 1 is a communication network arrangement as described above.
Example 2 is the communication network arrangement of Example 1, wherein the request is sent by a mobile terminal or is triggered by a network function in a communication network, in particular an Access and Mobility Management Function or a Session Management Function or a Policy Control Function or an Application Function.
Example 3 is the communication network arrangement of Example 1 or 2, wherein the communication service is a communication service for a mobile terminal, in particular a registration of a mobile terminal or the establishment of a communication session for a mobile terminal, or for a network function, in particular an application function.
Example 4 is the communication network arrangement of any one of Examples 1 to 3, wherein the controller is part of the quota monitoring and management component and suppressing the enquiries from the one or more enforcement components to the quota monitoring and management component includes sending a notification to the one or more enforcement components which indicates that the one or more enforcement components should stop sending enquiries to the quota monitoring and management component about whether providing a communication service would violate the quota.
Example 5 is the communication network arrangement of Example 4, wherein the communication network arrangement is part of a communication network including a plurality of network slices and the quota is a quota for a specific network slice and wherein the notification indicates that the one or more enforcement components should stop sending enquiries to the quota monitoring and management component, which relate to providing a communication service via the network slice.
Example 6 is the communication network arrangement of Example 4 or 5, wherein the notification indicates that the one or more enforcement components should stop sending enquiries to the quota monitoring and management component about whether providing a communication service would violate the quota until being notified to resume sending enquiries to the quota monitoring about whether providing a communication service would violate the quota.
Example 7 is the communication network arrangement of any one of Examples 4 to 6, wherein the notification indicates that the one or more enforcement components should stop sending enquiries to the quota monitoring about whether providing a communication service would violate the quota until a waiting period has expired, wherein the notification optionally indicates the length of the waiting period.
Example 8 is the communication network arrangement of any one of Examples 1 to 3, wherein the controller is part of a forwarding component configured to receive enquiries from the one or more enforcement components and to forward the received enquiries to the quota monitoring and management component and wherein suppressing the transmission of enquiries from the one or more enforcement components to the quota monitoring and management component includes stopping forwarding received enquiries to the quota monitoring and management component.
Example 9 is the communication network arrangement of Example 8, wherein the forwarding component is a proxy or a load balancer.
Example 10 is the communication network arrangement of any one of Examples 1 to 3, wherein the controller is part of the one or more enforcement components.
Example 11 is the communication network arrangement of any one of Examples 1 to 10, wherein the quota limits the total data rate over the communication sessions provided in a network slice for all mobile terminals, wherein the quota limits the total data rate over all communication sessions provided in a network slice or wherein the quota limits the number of mobile terminals registered in a network slice and/or the number of communication sessions provided in a network slice.
Example 12 is the communication network arrangement of any one of Examples 1 to 11, wherein the one or more enforcement components are Access and Mobility Management Functions or Session Management Functions and wherein the quota monitoring and management component is a Network Slice Admission Control Function or a Policy Control Function.
Example 13 is the communication network arrangement of any one of Examples 1 to 12, wherein suppressing the transmission of enquiries from the one or more enforcement components to the quota monitoring and management component includes preventing the transmission enquiries from the one or more enforcement components to the quota monitoring and management component related to mobile terminals belonging to a pre-determined group of mobile terminals or located in a pre-determined area.
Example 14 is the communication network arrangement of Example 13, wherein the one or more enforcement components are part of a communication network and the pre-determined group of mobile terminals are those mobile terminals for which the communication network is a visited communication network, wherein the quota monitoring and management component is part of the visited communication network of the group of mobile terminals and/or part of a further communication network which is a home communication network of the group of mobile terminals.
Example 15 is a method for reducing signalling to and from a quota monitoring and management component including deciding whether to restrict signalling between one or more enforcement components and a quota monitoring and management component, wherein each enforcement component is configured to send, in response to a request for a communication service, an enquiry to the quota monitoring and management component about whether providing the communication service would violate a quota and suppressing the transmission of enquiries from the one or more enforcement components to the quota monitoring and management component if it has been decided to restrict signalling between the one or more enforcement components and the quota monitoring and management component.
Example 16 is the method of Example 15, wherein the request is sent by a mobile terminal or is triggered by a network function in a communication network, in particular an Access and Mobility Management Function or a Session Management Function or a Policy Control Function or an Application Function.
Example 17 is the method of Example 15 or 16, wherein the communication service is a communication service for a mobile terminal, in particular a registration of a mobile terminal or the establishment of a communication session for a mobile terminal, or for a network function, in particular an application function.
Example 18 is the method of any one of Examples 15 to 17, performed by the quota monitoring and management component and suppressing the enquiries from the one or more enforcement components to the quota monitoring and management component includes sending a notification to the one or more enforcement components which indicates that the one or more enforcement components should stop sending enquiries to the quota monitoring and management component about whether providing a communication service would violate the quota.
Example 19 is the method of Example 18, wherein the quota monitoring and management component and the one or more quota enforcement components are part of a communication network including a plurality of network slices and the quota is a quota for a specific network slice and wherein the notification indicates that the one or more enforcement components should stop sending enquiries to the quota monitoring and management component, which relate to providing a communication service via the network slice.
Example 20 is the method of Example 18 or 19, wherein the notification indicates that the one or more enforcement components should stop sending enquiries to the quota monitoring and management component about whether providing a communication service would violate the quota until being notified to resume sending enquiries to the quota monitoring about whether providing a communication service would violate the quota.
Example 21 is the method of any one of Examples 18 to 20, wherein the notification indicates that the one or more enforcement components should stop sending enquiries to the quota monitoring about whether providing a communication service would violate the quota until a waiting period has expired, wherein the notification optionally indicates the length of the waiting period.
Example 22 is the method of any one of Examples 15 to 17, performed by a forwarding component configured to receive enquiries from the one or more enforcement components and to forward the received enquiries to the quota monitoring and management component and wherein suppressing the transmission of enquiries from the one or more enforcement components to the quota monitoring and management component includes stopping forwarding received enquiries to the quota monitoring and management component.
Example 23 is the method of Example 22, wherein the forwarding component is a proxy or a load balancer.
Example 24 is the method of any one of Examples 15 to 17, performed by the one or more enforcement components.
Example 25 is the method of any one of Examples 15 to 24, wherein the quota limits the total data rate over the communication sessions provided in a network slice for all mobile terminals, wherein the quota limits the total data rate over all communication sessions provided in a network slice or wherein the quota limits the number of mobile terminals registered in a network slice and/or the number of communication sessions provided in a network slice.
Example 26 is the method of any one of Examples 15 to 25, wherein the one or more enforcement components are Access and Mobility Management Functions or Session Management Functions and wherein the quota monitoring and management component is a Network Slice Admission Control Function or a Policy Control Function.
Example 27 is the method of any one of Examples 15 to 26, wherein suppressing the transmission of enquiries from the one or more enforcement components to the quota monitoring and management component includes preventing the transmission enquiries from the one or more enforcement components to the quota monitoring and management component related to mobile terminals belonging to a pre-determined group of mobile terminals or located in a pre-determined area.
Example 28 is the method of Example 27, wherein the one or more enforcement components are part of a communication network and the pre-determined group of mobile terminals are those mobile terminals for which the communication network is a visited communication network, wherein the quota monitoring and management component is part of the visited communication network of the group of mobile terminals and/or part of a further communication network which is a home communication network of the group of mobile terminals.

It should be noted that one or more of the features of any of the examples above may be combined with any one of the other examples.

According to further embodiments, a computer program and a computer readable medium including instructions, which, when executed by a computer, make the computer perform the method of any one of the above Examples are provided.

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
FIG. 1 shows a radio communication system, for example configured according to 5G (Fifth Generation) as specified by 3GPP (Third Generation Partnership Project).
FIG. 2 illustrates a communication between an AMF (Access and Mobility Management Function) and an NSACF (Network Slice Admission Control Function).
FIG. 3 shows a flow diagram illustrating an approach for restricting signalling to and from an NSACF according to a first embodiment.
FIG. 4 shows a flow diagram illustrating an approach for restricting signalling to and from an NSACF according to a second embodiment.
FIG. 5 shows a flow diagram illustrating an approach for restricting signalling to and from an NSACF according to a third embodiment.
FIG. 6 illustrates an example how an NSACF may decide whether to suppress signalling and, if yes, optionally, to determine a waiting period by consulting an NWDAF.
FIG. 7 illustrates a control of the restricting of signalling between one or more AMFs and an NSACF via a load balancer.
FIG. 8 shows a communication network arrangement according to an embodiment.
FIG. 9 shows a flow diagram illustrating a method for restricting signalling exchanged between a quota enforcement component and a quota monitoring and management component.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

In the following, various examples will be described in more detail.

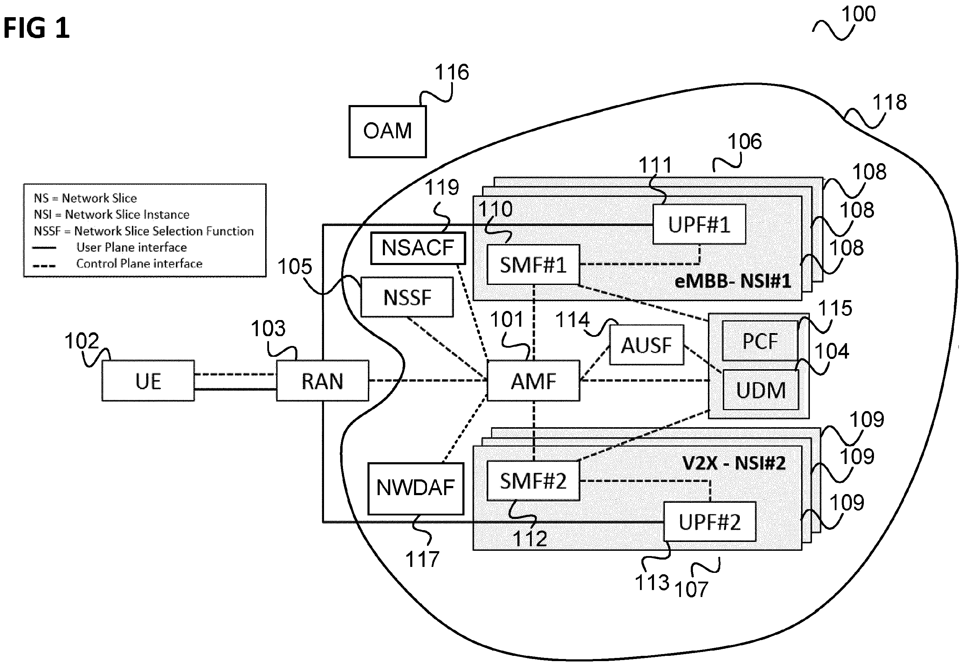

FIG. 1 shows a radio communication system 100, for example configured according to 5G (Fifth Generation) as specified by 3GPP (Third Generation Partnership Project).

The radio communication system 100 includes a mobile radio terminal device 102 such as a UE (user equipment), a nano equipment (NE), and the like. The mobile radio terminal device 102, also referred to as subscriber terminal, forms the terminal side while the other components of the radio communication system 100 described in the following are part of the mobile radio communication network side, i.e. part of a mobile radio communication network (e.g. a Public Land Mobile Network PLMN).

Furthermore, the radio communication system 100 includes a radio access network 103, which may include a plurality of radio access network nodes, i.e. base stations configured to provide radio access in accordance with a 5G (Fifth Generation) radio access technology (5G New Radio). It should be noted that the radio communication system 100 may also be configured in accordance with LTE (Long Term Evolution) or another mobile radio communication standard but 5G is herein used as an example. Each radio access network node 103 may provide a radio communication with the mobile radio terminal device 102 over an air interface. It should be noted that the radio access network 103 may include any number of radio access network nodes.

The radio communication system 100 further includes a core network (5GC) 118 including an Access and Mobility Management Function (AMF) 101 connected to the RAN 103, a Unified Data Management (UDM) 104 and a Network Slice Selection Function (NSSF) 105. Here and in the following examples, the UDM may further consist of the actual UE's subscription database, which is known as, for example, the UDR (Unified Data Repository). The core network 118 further includes an AUSF (Authentication Server Function) 114 and a PCF (Policy Control Function) 115.

The core network 118 may have multiple network slices 106, 107 and for each network slice 106, 107, the operator (also referred to MNO for Mobile Network Operator) may create multiple network slice instances (NSIs) 108, 109. For example, the core network 118 includes a first core network slice 106 with three core network slice instances (CNIs) 108 for providing Enhanced Mobile Broadband (eMBB) and a second core network slice 107 with three core network slice instances (CNIs) 109 for providing Vehicle-to-Everything (V2X).

Typically, when a network slice is deployed, network functions (NFs) are instantiated, or (if already instantiated) referenced to form a network slice instance (NSI) and network functions that belong to a network slice instance are configured with a network slice instance identification.

Specifically, in the shown example, each instance 108 of the first core network slice 106 includes a first Session Management Function (SMF) 110 and a first User Plane Function (UPF) 111 and each instance 109 of the second core network slice 107 includes a second Session Management Function (SMF) 112 and a second User Plane Function (UPF) 113. The SMFs 110, 112 are for handling PDU (Protocol Data Unit) sessions, i.e. for creating, updating and removing PDU sessions and managing session context with the User Plane Function (UPF).

An S-NSSAI (Single Network Slice Selection Assistance information) identifies a network slice and consists of:
- A Slice/Service type (SST), which refers to the expected Network Slice behaviour in terms of features and services;
- A Slice Differentiator (SD) which is optional information that complements the slice/service type(s) to differentiate amongst multiple network slices of the same slice/service type.

NSSAI may include one or more S-NSSAIs.

Allowed NSSAI is NSSAI provided by the serving PLMN (Public Land Mobile Network) during e.g. a registration procedure, indicating the S-NSSAI values allowed by the network for a UE in the serving PLMN for the current registration area.

Configured NSSAI is NSSAI that has been provisioned in the UE. It may be applicable to one or more PLMNs.

Requested NSSAI is NSSAI that the UE provides to the network during registration in order to establish a PDU session to the requested network slice.

The core network 118 may further include a Network Data Analytics Function (NWDAF) 117. The NWDAF 117 is responsible for providing network analysis information upon request from network functions. For example, a network function may request specific network data analytics information on the network slice load level of a particular network slice. Alternatively, the network function can use the subscribe service to ensure that it is notified by the NWDAF 117 if the network slice load level of a network slice changes or reaches a specific threshold. The NWDAF 117 may have an interface to various network functions on the mobile radio communication network side, e.g. to the AMF 101, the SMFs 110, 112 and the PCF 115. For simplicity, only the interface between the NWDAF 117 and the AMF 101 is depicted.

The radio communication system 100 may further include an OAM (Operation, Administration and Maintenance) function (or entity) 116, e.g. implemented by one or more OAM servers which is connected to the RAN 103 and the core network 118 (connections are not shown for simplicity).

According to various embodiment, in a 5G radio communication system like the radio communication system 100, network slice related (network) quota are defined. This means that for example the data rate provided by a network slice 106, 107, i.e. the total data rate of all PDU sessions for a single UE being served in a network, is limited.

Alternatively or in addition, there may be a quota (or limit) which limits the total data rate (uplink and/or downlink) over the communication sessions provided in a network slice (for all mobile terminals in the network slice together), i.e. a data rate quota per network slice 106, 107.

Other network slice related quota which may be defined in a 5G radio communication system like the radio communication system 100 provide limitation of the maximum number of UEs and/or the maximum number of PDU sessions provided by a network slice 106, 107.

The core network 118 may include a Network Slice Admission Control Function 119 (NSACF) to support monitoring and management of a quota, e.g. to monitor and control the number of registered UEs per network slice for the network slices 106, 107 so that, for example, it does not exceed a maximum number of UEs that is allowed to register with the network slice 106, 107. The NSACF 119 may maintain a list of UEs registered for the network slice 106, 107 for reliability and accuracy on counting the number of UEs. If the maximum number of UEs has not been reached, an additional UE (requesting registration in the network slice 106, 107) is admitted to be registered for the network slice 106, 107. Otherwise, its registration is rejected. Similarly, the NSACF 117 may maintain a list of PDU Sessions associated with the UE registered for the network slice 106, 107 for reliability and accuracy on counting the number of PDU Sessions. If the maximum number of PDU Sessions has not been reached, an additional PDU Session (requesting establishment in the network slice 106, 107) is admitted to be established for the network slice 106, 107. Otherwise, its request for establishment is rejected.

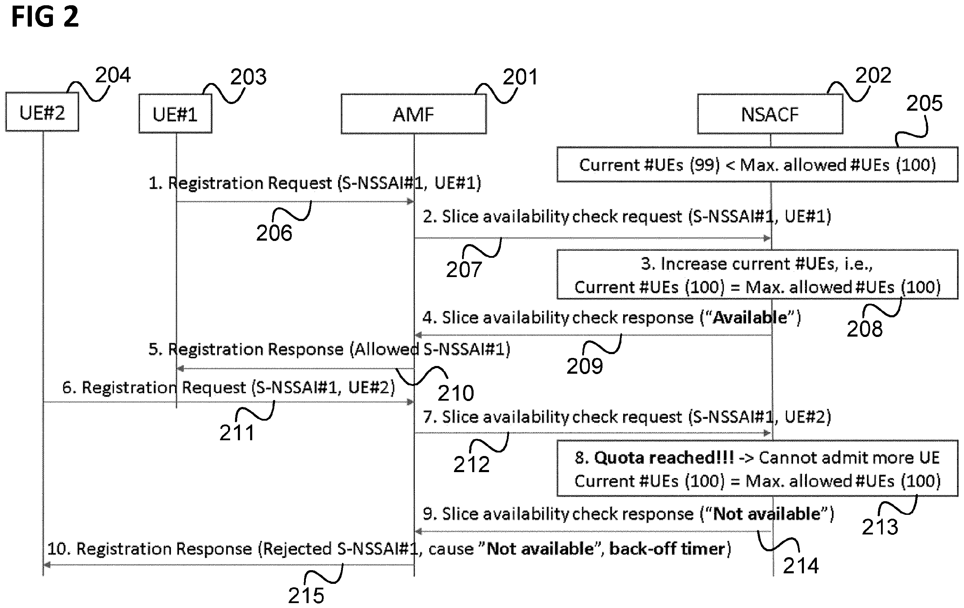

It should be noted that in FIG. 1 the connections of NWDAF 117 and NSACF 119 are shown to be connected to the AMF 101. However, all the network functions of the core network 118 may also be directly connected to one another via respective interfaces. FIG. 2 illustrates a communication between an AMF 201 (e.g. corresponding to AMF 101) and an NSACF 202 (e.g. corresponding to NSACF 119).

In the present example, it is assumed that the quota limits the number of UEs registered in a certain network slice to 100 and that in the beginning 204 there are 99 UEs registered in the network slice.

In 206, there is a trigger in the AMF 201 to perform number of UEs per network slice availability check and update. In the present example, this is a registration request from a first UE 203 (e.g. corresponding to UE 102).

In 207, the AMF 201 sends a request to the NSACF 202 to check whether the UE's registration request may be accepted (or whether that would violate the quota).

The NSACF 202 then checks whether the quota allows that the first UE is registered in 208. Since the first UE 203 is the 100th UE to be registered, this does not violate the quota. Accordingly, the NSACF updates the number of registered UEs to 100 and sends a notification to the AMF 201 that the slice is available for registration of a UE in 209.

In 210, the AMF 201 responds to the first UE 203 that its registration is accepted.

It should be noted that the above may be performed per network slice, i.e. the registration is for a certain network slice and the quota is checked for that network slice (i.e. taking into account the number of UEs registered in that network slice).

Thus, if the maximum number of UEs has not been reached, the additional UE is admitted to be registered for the network slice. Otherwise, the AMF 201 rejects its registration.

The AMF 201 may have a local policy or a local configuration indicating which network slice is subject to network slice admission control. Such policy and configuration are subject to the network operator to specify and they are configured, e.g., via the OAM The NSACF 202 for example maintains a list of UEs registered for the network slice for reliability and accuracy of the count of the number of registered UEs.

Now, assume that a second UE 204 sends a registration request to the AMF 201 similarly to the first UE in 206. Then, accordingly, in 212, the AMF 201 sends a request to the NSACF 202 to check whether the UE's registration request may be accepted (or whether that would violate the quota).

The NSACF 202 then checks whether the quota allows that the first UE is registered in 213. Now, however, the quota has been reached because the first UE 203 was the 100th UE registered.

Therefore, in 214, the NSACF 202 notifies the AMF 201 that the requested network slice is not available and hence the second UE 204 is not allowed to be registered. The AMF, in 215, rejects the second UE's registration.

It should be noted in case of quota limitation on the PDU Sessions, AMF 201 and/or SMF 110, 112 sends a request to the NSACF 202 to check whether the PDU Session's establishment request may be accepted (or whether that would violate the quota) and to update the number of registered PDU Sessions in the NSACF (if the UE's PDU Session request is granted). Based on the NSACF 202 response, AMF 201 and/or SMF 110, 112 either accept or reject the PDU Session. Similarly, a PDU Session or a registration may be rejected if its data rate requirements (e.g. due to Quality-of-Service for the session) would violate a quota on the data rate (e.g. a total MBR (maximum bit rate) quota in a network slice). To enforce a data rate quota like that, an AMF, an SMF or also a PCF may communicate with an NSACF. If the NSACF does not have the capability to perform the control of maximum data rate of the network slice, a PCF may have such a capability instead. In that case, an SMF may for example communicate with the PCF before accepting a session to be established.

In case of registration or PDU session establishment rejection, AMF 201 and/or SMF 110, 112 may include a back-off period for the UE 102 into the rejection message.

Conventionally, the AMF 201 sends a request as in 207 and 212 to the NSACF 202 for every registration request (or PDU session request in case of quota limitation on the PDU Sessions).

Thus, if further UEs, for example a third UE or a fourth UE, send registration requests to the AMF 201, the AMF 201 will send corresponding slice availability check requests to the NSACF. However, as for the second UE 204 (assuming that no UE has de-registered), each of these slice availability check requests will be answered with a response "Not available" (or "FULL") like in 214. If the quota on the registered UEs (or similarly PDU sessions) is reached for a prolonged time, this may cause an undesirable signalling between the AMF 201 and the NSCAF 202 in form of slice availability check requests and negative responses by the NSACF 202.

According to various embodiments, approaches are provided to restrict (reduce or avoid) this signalling, i.e. to restrict signalling towards (and from) an NSACF, if a quota has been reached for a prolonged period of time.

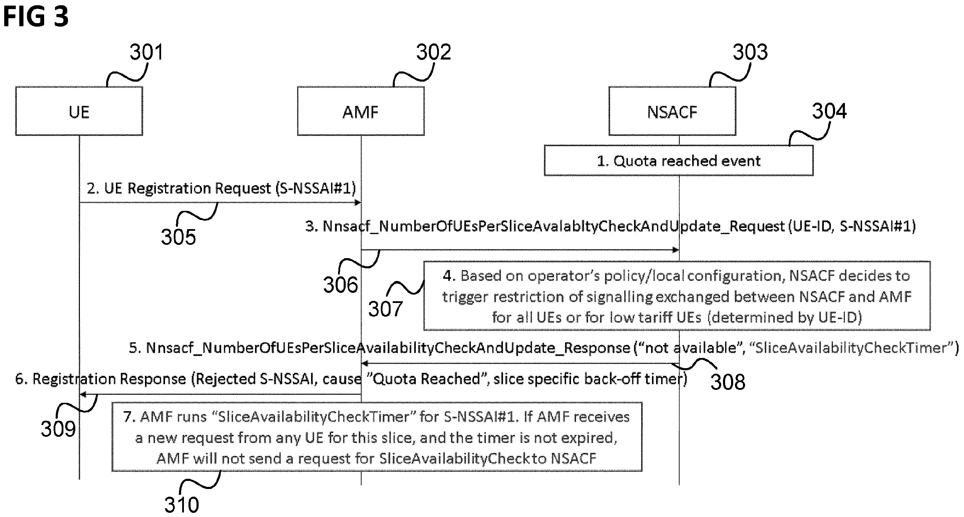

FIG. 3 shows a flow diagram 300 illustrating an approach for restricting signalling to and from an NSACF according to a first embodiment.

The flow takes place between a UE 301, an AMF 302 and an NSACF 303, similarly to the second UE 204, the AMF 201 and the NSACF 202 in FIG. 2.

It is assumed that in 304, a quota is reached. This is in this example that a limit of registered UEs in a certain network slice has been reached but may also relate to the number of PDU sessions or the data rate.

In 305, the UE 301 sends a registration request to the AMF 302.

In 306, the AMF 302 sends a request to the NSACF 303 to check whether the UE's registration request may be accepted (or whether that would violate the quota) and to update the number of registered UEs in the NSACF (if the UE's registration request is granted).

In 307, the NSACF 303 determines that the UE's registration would violate the quota. Based on the operator's policy or a local configuration or a collected network data analytics information available at the NSACF 303, the NSACF 303 decides to trigger restriction of signalling exchanged between the NSACF 303 and the AMF 302. This restriction may be a restriction which applies to all UEs or also to a certain group of UEs, e.g. low tariff UEs or roaming UEs or UEs in a certain area (e.g. for specific Tracking Areas (TAs)). Whether a UE belongs to such a group may be determined by UE-ID or location. There may be several AMFs serving this network slice subject to the network slice admission control and, when the maximum number of UEs has been reached, and based on the operator's policy or a local configuration or a collected network data analytics information available at the NSACF 303, the NSACF 303 may decide to restrict signalling exchanged between the AMF 302 and the NSACF 303 only for a particular area in an operator network, e.g., restriction of signalling in an urban area (crowded area), where there may be many UEs located, rather than restriction of signalling in a rural area, where there are usually not many UEs located.

The NSACF 303 may decide to trigger the restriction in accordance with a policy of the operator of the communication network to which it belongs and/or a local configuration in the NSACF 303.

In 308, the NSACF 303 notifies the AMF 302 that the UE's registration request may not be accepted.

According to the first embodiment, this notification includes a
"SliceAvailabilityCheckTimer", i.e. the specification of a waiting period for which the AMF 302 has to wait until it sends another SliceAvailabilityCheck enquiry like in 306 (i.e. in this example an enquiry about whether the UE may be registered or whether this would violate the quota) .

In 309, the AMF 302 sends a rejection to the UE's registration request to the UE 301. The AMF 302 may include a back-off period for the UE 301 into the rejection message.

In 310, the AMF 302 runs a timer to detect when the "SliceAvailabilityCheckTimer" period (i.e. the waiting period) has expired. This timer is for example specific for a network slice (e.g. for S-NSSAI#1 in this example). Until the timer has expired, if the AMF 201 receives a request from any UE for this network slice, the AMF 302 does not send a SliceAvailabilityCheck enquiry to the NSACF 303. Rather, the AMF 302 will reject all registration requests for that network slice without SliceAvailabilityCheck enquiry. A similar approach may be used for requests for PDU Sessions or for requests for total network slice UL/DL data rate control per network slice.

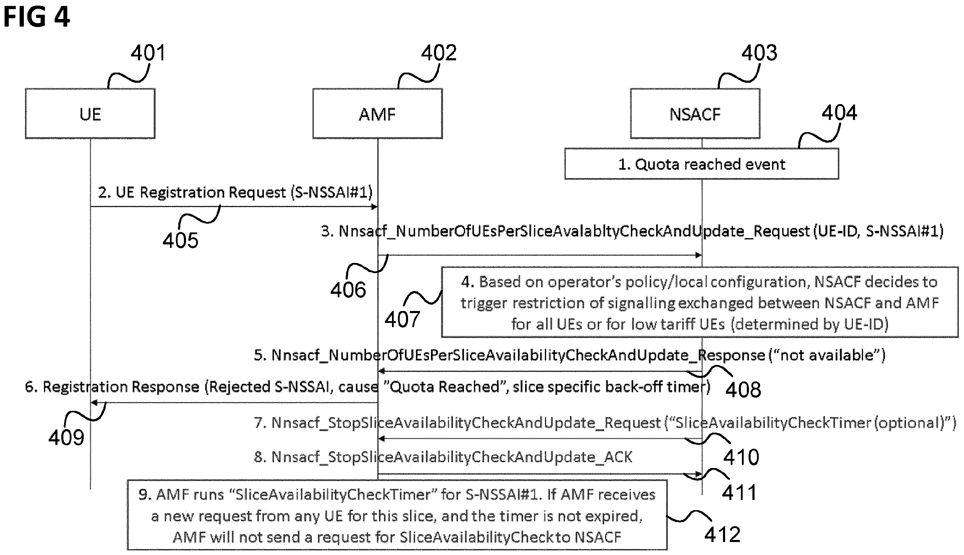

FIG. 4 shows a flow diagram 400 illustrating an approach for reducing signalling to and from an NSACF according to a second embodiment.

The flow takes place between a UE 401, an AMF 402 and an NSACF 403, similarly to the second UE 204, the AMF 201 and the NSACF 202 in FIG. 2.

It is assumed that in 404, a quota is reached. This is in this example that a limit of registered UEs in a certain network slice has been reached but may also relate to the number of PDU sessions or the data rate.

In 405, the UE 401 sends a registration request to the AMF 402.

In 406, the AMF 402 sends a request to the NSACF 403 to check whether the UE's registration request may be accepted (or whether that would violate the quota) and to update the number of registered UEs in the NSACF (if the UE's registration request is granted).

In 407, the NSACF 403 determines that the UE's registration would violate the quota and decides to trigger restriction of signalling exchanged between the NSACF 403 and the AMF 402. This restriction may be a restriction which applies to all UEs or also to a certain group of UEs, e.g. low tariff UEs. Whether a UE belongs to such a group may be determined by UE-ID or location. There may be several AMFs serving this network slice subject to the network slice admission control and, when the maximum number of UEs has been reached, and based on the operator's policy or a local configuration or a collected network data analytics information available at the NSACF 303, the NSACF 303 may decide to restrict signalling exchanged between the AMF 302 and the NSACF 303 only for a particular area in an operator network, e.g., restriction of signalling in an urban area (crowded area), where there may be many UEs located, rather than restriction of signalling a rural area, where there are usually not many UEs located.

The NSACF 403 may decide to trigger the restriction in accordance with a policy of the operator of the communication network to which it belongs and/or a local configuration in the NSACF 403.

In 408, the NSACF 403 notifies the AMF 402 that the UE's registration request may not be accepted.

In 409, the AMF 402 sends a rejection to the UE's registration request to the UE 401. The AMF 402 may include a back-off period for the UE 401 into the rejection message. According to the second embodiment, the NSACF 403 instructs, in 410, in a separate message, the AMF 402 to wait until it sends another SliceAvailabilityCheck enquiry like in 406 (i.e. in this example an enquiry about whether the UE may be registered or whether this would violate the quota) until a waiting period has expired. The NSACF 403 may indicate the waiting period (referred to as "SliceAvailabilityCheckTimer") in the message.

In 411, the AMF 402 acknowledges this instruction.

In 412, the AMF 402 runs a timer to detect when the waiting (e.g. "SliceAvailabilityCheckTimer") period has expired. This timer is for example specific for a network slice (e.g. for S-NSSAI#1 in this example). Until the timer has expired, if the AMF 201 receives a request from any UE for this network slice, the AMF 201 does not send a SliceAvailabilityCheck enquiry to the NSACF 403. Rather, the AMF 402 will reject all registration requests for that network slice without SliceAvailabilityCheck enquiry. A similar approach may be used for requests for PDU Sessions.

The NSACF 403 may for example make use of HTTP (Hypertext Transfer Protocol) capabilities (e.g. the Retry-After response header) to inform the AMF 402 about the waiting period.

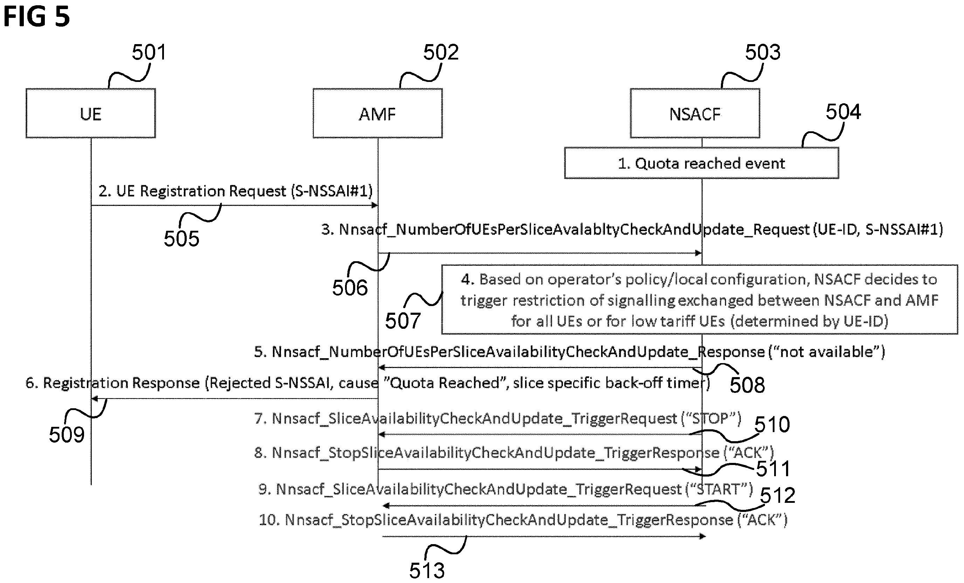

FIG. 5 shows a flow diagram 500 illustrating an approach for reducing signalling to and from an NSACF according to a third embodiment.

The flow takes place between a UE 501, an AMF 502 and an NSACF 503, similarly to the second UE 204, the AMF 201 and the NSACF 202 in FIG. 2.

It is assumed that in 504, a quota is reached. This is in this example that a limit of registered UEs in a certain network slice has been reached but may also relate to the number of PDU sessions or the data rate.

In 505, the UE 501 sends a registration request to the AMF 502.

In 506, the AMF 502 sends a request to the NSACF 503 to check whether the UE's registration request may be accepted (or whether that would violate the quota) and to update the number of registered UEs in the NSACF (if the UE's registration request is granted).

In 507, the NSACF 503 determines that the UE's registration would violate the quota and decides to trigger restriction of signalling exchanged between the NSACF 503 and the AMF 502. This restriction may be a restriction which applies to all UEs or also to a certain group of UEs, e.g. low tariff UEs. Whether a UE belongs to such a group may be determined by UE-ID or location. There may be several AMFs serving this network slice subject to the network slice admission control and when the maximum number of UEs has been reached, and based on the operator's policy or a local configuration or a collected network data analytics information available at the NSACF 303, the NSACF 303 may decide to restrict signalling exchanged between the AMF 302 and the NSACF 303 only for a particular area in an operator network, e.g., restriction of signalling in an urban area (crowded area), where there may be many UEs located, rather than restriction of signalling a rural area, where there are usually not many UEs located..

The NSACF 503 may decide to trigger the restriction in accordance with a policy of the operator of the communication network to which it belongs and/or a local configuration in the NSACF 503.

In 508, the NSACF 503 notifies the AMF 502 that the UE's registration request may not be accepted.

In 509, the AMF 502 sends a rejection to the UE's registration request to the UE 501. The AMF 502 may include a back-off period for the UE 501 into the rejection message. According to the third embodiment, the NSACF 503 instructs, in 510, in a separate message, the AMF 502 to stop sending enquiries like in 506 (i.e. enquiries about whether the UE may be registered or whether this would violate the quota) until further notice.

In 511, the AMF 502 acknowledges this instruction.

After a certain time (e.g. a waiting period decided upon by the NSACF 503, e.g. according to operator policy and/or local configuration, or when a the quota is no longer reached), the NSACF 503 sends, in 512, a message to the AMF 502 which allows the AMF 502 to resume sending enquiries about whether the UE may be registered or whether this would violate the quota.

In 513, the AMF 502 acknowledges this.

From the reception of the instruction of 510 and until the AMF 502 has received the message of 512, if the AMF 201 receives a request from any UE for this network slice, the AMF 201 does not send a SliceAvailabilityCheck enquiry to the NSACF 503. Rather, the AMF 502 will reject all registration requests for that network slice without SliceAvailabilityCheck enquiry. A similar approach may be used for requests for PDU Sessions.

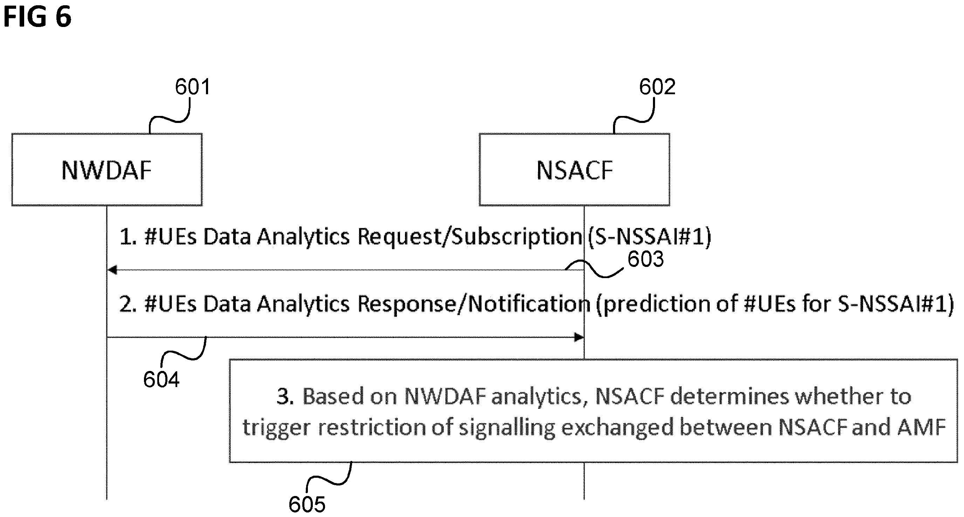

FIG. 6 illustrates an example how an NSACF 601 may decide whether to suppress signalling and, if yes, determine a waiting period (during which enquiries from an AMF should be suppressed like in the examples of FIG. 3 to FIG. 5) by consulting an NWDAF 602 (e.g. corresponding to NWDAF 117).

In 603, the NSACF 601 sends a message to be provided with network data analytics information by the NWDAF 602 and in 604 the NWDAF 602 sends a corresponding message including the requested information. The message pair of 603 and 604 may be a response and request message pair or the message of 603 may be a subscription message

(to subscribe to a corresponding information service provided by the NSACF 601) and the message of 604 may be a corresponding notification message.

The network data analytics information is for example a prediction of mobile terminals for a certain network slice (for which the NSACF 601 intends to determine the waiting period), or a prediction of number of PDU Sessions for a certain network slice (for which the NSACF 601 intends to determine the waiting period) or a prediction of total network slice UL/DL data rate of all UEs and of all PDU Sessions for a certain network slice (for which the NSACF 601 intends to determine the waiting period). The information may for example be that it is expected that 100 UEs will be registered for the next 5 minutes. It may also be that right now 100 UEs are registered and it is expected that the situation will stay like that for the next 3 minutes. Similar information may for example be applicable as well for the case of number of PDU Sessions in a network slice or for the case of total network slice UL/DL data rate of all UEs and of all PDU Sessions for a certain network slice.

In 605 the NSACF 601 may decide whether to suppress signalling, i.e. instruct one or more AMFs to stop sending enquiries related to the network slice (i.e. whether registration or establishment of a communication session is allowed in view of a quota for the network slice) and, if yes, it may provide optionally the length of a corresponding waiting period.

The NWDAF 602 may for example generate the network data analytics information by collecting data from AMFs related to the number of UEs currently registered, and/or by collecting data from AMF/SMF related to the number of sessions currently established, the services used, and/or by collecting data from the PCF/SMF/UPF related to the current UL/DL data rate for the PDU Sessions and for the UEs, etc. The NWDAF 602 may use artificial intelligence to generate the network data analytics information by performing corresponding prediction based on the collected data. Alternatively, the NSACF may also use artificial intelligence itself for determining such information or for taking a decision. In the examples of FIG. 3 to FIG. 5, the NSCAF sends a waiting period or a start-stop notifications to the AMF. In other words, the control of the suppression of signalling (as well as the "intelligence" related to the decision to suppress signalling) is located in the NSCAF itself.

In an alternative embodiment, there could be an entity (like a load balancer or proxy) which implements this control. This controller (external to the NSCAF in that case) determines when to forward or not to forward the SliceAvailabilityCheck enquiries to the NSACF, for example using artificial intelligence and/or network data analytics related to the number of UEs, PDU Sessions and/or overall data rate in the network slice which may be provided by a network data analytics function (NWDAF). Such analytics may include information on the average of number of UEs, number of PDU Sessions and/data rate of the whole network slice, and the prediction of these information. Another alternative is to have that capabilities (i.e. that intelligence related to the control of the suppression of signalling) available at the AMF directly without a load balancer or proxy between the AMF (or SMF) and the NSACF, so that when the AMF receives information from the NSACF that there is no availability for upcoming service requests, the AMF (or SMF) uses such load balancing and/or artificial intelligence capabilities to determine whether to perform the SliceAvailabilityCheck with the NSACF or not.

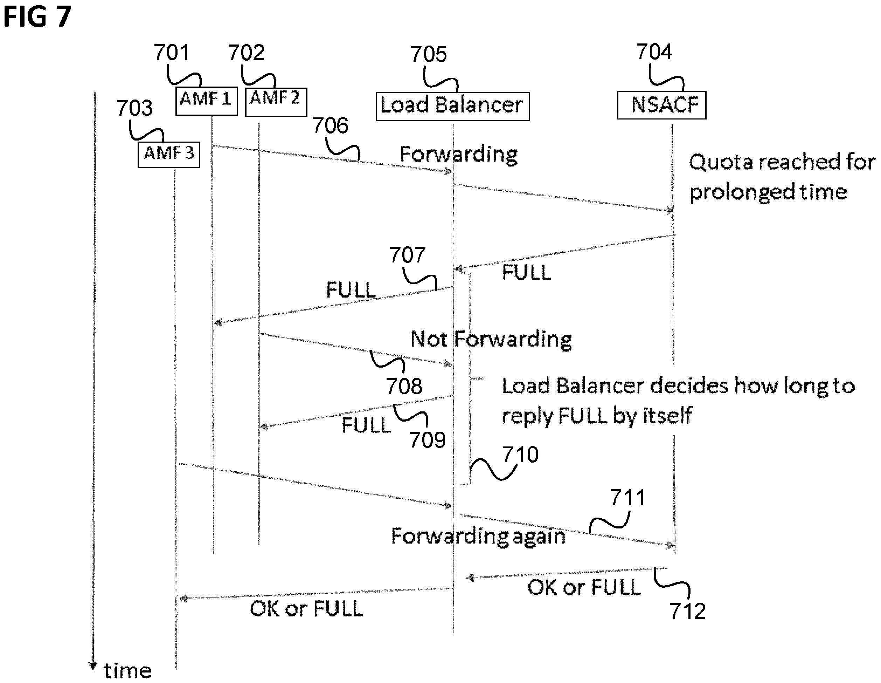

FIG. 7 illustrates a control of the suppression of signalling between one or more AMFs (or SMFs, in general management components) 701, 702, 703 and an NSACF (or PCF, in general quota monitoring and management component) 704 via a load balancer (or proxy, in general controller external to the management components and quota monitoring and management component) 705.

In the illustrated example, a first AMF 701 sends a first enquiry to the NSACF 704 via the load balancer 705 in 706. It is assumed in this example that the respective quota has been reached and it is expected that this will be the case for a certain time. Therefore, the load balancer 705, after having forwarded the (negative) response to the first enquiry in 707 decides to stop forwarding enquiries from the AMFs 701 to 703 to the NSACF 704. For example, when the second AMF 702 sends a second enquiry in 708, the load balancer 705 does not forward this to the NSACF 704 but responds itself with a negative response (i.e. in this example that the registration of a UE should be rejected because the quota has been reached) to the second AMF 702 in 709. The load balancer 705 acts like this for a waiting period 710.

After the waiting period 710, the load balancer 705 resumes forwarding of enquiries, e.g. a third enquiry by the third AMF 703 in 711. The NSACF 704 responds to the forwarded enquiries, in this example the third enquiry, depending on whether the quota is still fulfilled or not in 712.

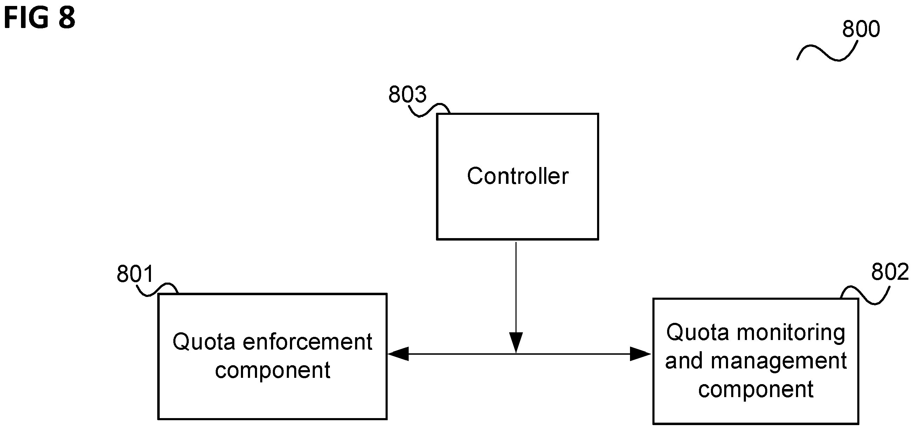

In summary, according to various embodiments, a communication network arrangement is provided as illustrated in FIG. 8.

FIG. 8 shows a communication network arrangement 800 according to an embodiment.

The communication network arrangement 800 includes a quota monitoring and management component 802.

The communication network arrangement 800 further includes one or more enforcement components 801, wherein each enforcement component 801 is configured to send, in response to a request (e.g. of a mobile terminal) for a communication service, an enquiry to the quota monitoring and management component 802 about whether providing the communication service would violate a quota.

The communication network arrangement 800 further includes a controller 803 configured to decide whether to restrict signalling between the one or more enforcement components and the quota monitoring and management component and configured to suppress the transmission of enquiries from the one or more enforcement components to the quota monitoring and management component if it has decided to restrict signalling between the one or more enforcement components and the quota monitoring and management component.

According to various embodiments, in other words, a controlling functionality is provided which may restrict (reduce or prevent) the signalling between an enforcement component (which should respect a quota in its management operation) and a quota monitoring and management component.

For example, the control plane (CP) signalling between an AMF and an NSACF may be restricted. This may for example be done by a network lice specific availability check timer at the AMF (generally the management component) or by means of a START/STOP of slice availability checking by the NSACF (generally the quota monitoring and management component). The controller may restrict the signalling if the quota (e.g. maximum number of UEs or sessions) has been reached or is predicted to be reached for a prolonged time (e.g. a time longer than a predetermined threshold, e.g. defined by the operator).

For example, an on-demand stopping of slice availability checking with the NSACF based on operator's policy and the NSACF's local configuration is performed.

The approach of figure FIG. 8 allows restricting the amount of signalling messages exchanged between the quota monitoring and management component (e.g. NSACF) and the enforcement components (e.g. AMFs or SMFs or PCFs) when a quota has been reached (and remains like that) for a long period of time.

It should be noted that there may exist different quota for roaming and non-roaming terminals. For example, there may be quota for
- Maximum number of terminals that can use a specific network slice simultaneously
- Maximum number of non-roaming terminals that can use a specific network slice simultaneously
- Maximum number of roaming terminals that can use a specific network slice simultaneously
- Maximum number of concurrent sessions supported by a specific network slice
- Maximum number of concurrent non-roaming sessions supported by a specific network slice
- Maximum number of concurrent roaming sessions supported by a specific network slice

This allows the operator to differentiate the number of non-roaming UEs and the number of roaming UEs and similarly the number of sessions of non-roaming UEs and roaming UEs.

In roaming scenario, there may be an NSACF in an HPLMN (Home PLMN) and another NSACF in a VPLMN (Visited PLMN). The operator of the H-PLMN and the operator of the V-PLMN may have an agreement to apply "network slice availability check and update" for a network slice subject to such a network slice admission control. In addition, there could be a dedicated max #UEs (maximum number of UEs) and/or max #PDU Sessions (maximum number of PDU sessions) or data rate of the whole network slice for roaming UEs. In such case, the V-NSACF (i.e. NSACF of the VPLMN) may have such dedicated information on max #UEs, #PDU Sessions or data rate of the whole network slice for roaming UEs, e.g., configured by an OAM. A mechanism as described above to restrict signalling exchanged between V-NSACF and V-AMF (AMF of VPLMN) can be applied. It is also possible that the V-NSACF may have to consult with the H-NSACF (NSACF of HPLMN) in order to perform a mechanism to restrict signalling exchanged between the V-AMF and the V-NSACF or even between the V-NSACF and the H-NSACF.

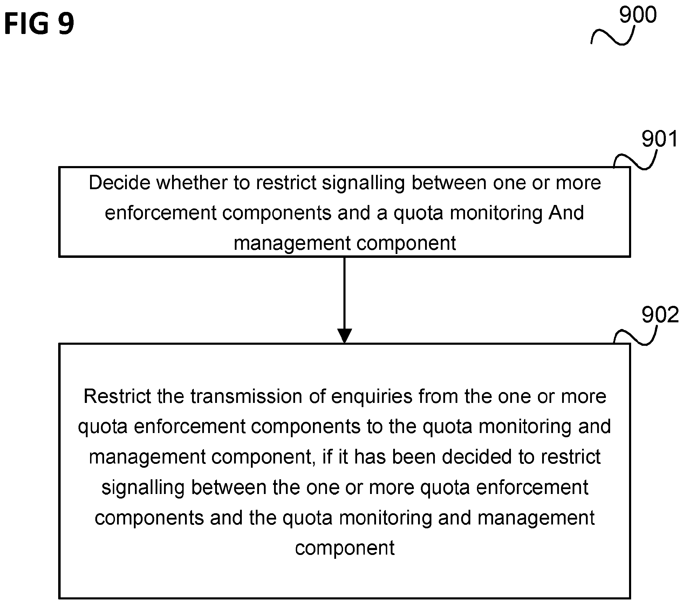

The communication network arrangement for example carries out a method as illustrated in FIG. 9.

FIG. 9 shows a flow diagram 900 illustrating a method for reducing signalling to and from a quota monitoring and management component.

In 901, it is decided whether to restrict signalling between one or more enforcement components and a quota monitoring and management component. Each enforcement component is configured to (i.e. intends to, if allowed) send, in response to a request (e.g. of a mobile terminal) for a communication service, an enquiry to the quota monitoring and management component about whether providing the communication service would violate a quota.

In 902, the transmission of enquiries from the one or more enforcement components to the quota monitoring and management component is suppressed if it has been decided to restrict signalling between the one or more enforcement components and the quota monitoring and management component.

The components of the communication network arrangement (e.g. the one or more enforcement components and the quota monitoring and management component) may for example be implemented by one or more circuits. A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions described above may also be understood as a "circuit".

It should be noted that embodiments and examples described in context of the communication network arrangement are analogously valid for the method.

While specific aspects have been described, it should be understood by those skilled in the art that various changes in form and detail may be made therein without departing from the spirit and scope of the aspects of this disclosure as defined by the appended claims. The scope is thus indicated by the appended claims and all changes which come within the meaning and range of equivalency of the claims are therefore intended to be embraced.

## Claims

1. A communication network arrangement comprising:
a quota monitoring and management component;
one or more enforcement components, wherein each enforcement component is configured to send, in response to a request for a communication service, an enquiry to the quota monitoring and management component about whether providing the communication service would violate a quota;
a controller configured to decide whether to restrict signalling between the one or more enforcement components and the quota monitoring and management component and configured to suppress the transmission of enquiries from the one or more enforcement components to the quota monitoring and management component if it has decided to restrict signalling between the one or more enforcement components and the quota monitoring and management component.

2. The communication network arrangement of claim 1, wherein the request is sent by a mobile terminal or is triggered by a network function in a communication network arrangement, in particular an Access and Mobility Management Function or a Session Management Function or a Policy Control Function or an Application Function.

3. The communication network arrangement of claim 1 or 2, wherein the communication service is a communication service for a mobile terminal, in particular a registration of a mobile terminal or the establishment of a communication session for a mobile terminal, or for a network function, in particular an application function.

4. The communication network arrangement of any one of claims 1 to 3, wherein the controller is part of the quota monitoring and management component and suppressing the enquiries from the one or more enforcement components to the quota monitoring and management component comprises sending a notification to the one or more enforcement components which indicates that the one or more enforcement components should stop sending enquiries to the quota monitoring and management component about whether providing a communication service would violate the quota.

5. The communication network arrangement of claim 4, wherein the communication network arrangement is part of a communication network comprising a plurality of network slices and the quota is a quota for a specific network slice and wherein the notification indicates that the one or more enforcement components should stop sending enquiries to the quota monitoring and management component, which relate to providing a communication service via the network slice.

6. The communication network arrangement of claim 4 or 5, wherein the notification indicates that the one or more enforcement components should stop sending enquiries to the quota monitoring and management component about whether providing a communication service would violate the quota until being notified to resume sending enquiries to the quota monitoring about whether providing a communication service would violate the quota.

7. The communication network arrangement of any one of claims 4 to 6, wherein the notification indicates that the one or more enforcement components should stop sending enquiries to the quota monitoring about whether providing a communication service would violate the quota until a waiting period has expired, wherein the notification optionally indicates the length of the waiting period.

8. The communication network arrangement of any one of claims 1 to 3, wherein the controller is part of a forwarding component configured to receive enquiries from the one or more enforcement components and to forward the received enquiries to the quota monitoring and management component and wherein suppressing the transmission of enquiries from the one or more enforcement components to the quota monitoring and management component comprises stopping forwarding received enquiries to the quota monitoring and management component.

9. The communication network arrangement of claim 8, wherein the forwarding component is a proxy or a load balancer.

10. The communication network arrangement of any one of claims 1 to 3, wherein the controller is part of the one or more enforcement components.

11. The communication network arrangement of any one of claims 1 to 10, wherein the quota limits the total data rate over the communication sessions provided in a network slice for all mobile terminals, wherein the quota limits the total data rate over all communication sessions provided in a network slice or wherein the quota limits the number of mobile terminals registered in a network slice and/or the number of communication sessions provided in a network slice.

12. The communication network arrangement of any one of claims 1 to 11, wherein the one or more enforcement components are Access and Mobility Management Functions or Session Management Functions and wherein the quota monitoring and management component is a Network Slice Admission Control Function or a Policy Control Function.

13. The communication network arrangement of any one of claims 1 to 12, wherein suppressing the transmission of enquiries from the one or more enforcement components to the quota monitoring and management component comprises preventing the transmission enquiries from the one or more enforcement components to the quota monitoring and management component related to mobile terminals belonging to a pre-determined group of mobile terminals or located in a pre-determined area.

14. The communication network arrangement of claim 13, wherein the one or more enforcement components are part of a communication network and the pre-determined group of mobile terminals are those mobile terminals for which the communication network is a visited communication network, wherein the quota monitoring and management component is part of the visited communication network of the group of mobile terminals and/or part of a further communication network which is a home communication network of the group of mobile terminals.

15. A method for reducing signalling to and from a quota monitoring and management component comprising:
deciding whether to restrict signalling between one or more enforcement components and a quota monitoring and management component, wherein each enforcement component is configured to send, in response to a request for a communication service, an enquiry to the quota monitoring and management component about whether providing the communication service would violate a quota; and
suppressing the transmission of enquiries from the one or more enforcement components to the quota monitoring and management component if it has been decided to restrict signalling between the one or more enforcement components and the quota monitoring and management component.
